**Europäisches Patentamt**

**European Patent Office**

**Office européen des brevets**

(11) Numéro de publication: **0 172 046**
**B1**

(12) **FASCICULE DE BREVET EUROPÉEN**

(45) Date de publication du fascicule du brevet:
08.06.88

(51) Int. Cl.⁴: **H 01 S 3/139**

(21) Numéro de dépôt: **85401206.9**

(22) Date de dépôt: **18.06.85**

(54) **Dispositif de stabilisation en fréquence d'un laser à excitation rf.**

(30) Priorité: **19.06.84 FR 8409593**

(43) Date de publication de la demande:
**19.02.86 Bulletin 86/8**

(45) Mention de la délivrance du brevet:
**08.06.88 Bulletin 88/23**

(84) Etats contractants désignés:
**DE GB IT NL SE**

(56) Documents cité:
**FR-A-2 083 440**

**OPTICS COMMUNICATIONS, vol. 30, no. 2, août 1979, pages 213-218, Amsterdam, NL; A.L.S. SMITH et al.: "Opto-galvanic stabilized CO2 laser" REVIEW OF SCIENTIFIC INSTRUMENTS, vol. 46, no. 4, avril 1975, pages 409-412, American Institute of Physics, New York, US; W.H. THOMASON et al.: "An inexpensive method to stabilize the frequency of a CO2 laser" R.W. BEATTY: "Microwave impedance measurements and standards", National Bureau of Standards Monograph 82, 12 août 1965, pages 22-30;**

(73) Titulaire: **SAT Société Anonyme de Télécommunications, 41, rue Cantagrel, F-75631 Paris Cedex 13 (FR)**

(72) Inventeur: **Midavaine, Thierry Raoul, 41, rue Cantagrel, F-75631 Paris Cedex 13 (FR)**
Inventeur: **Ouhyaoun, Michel Maurice, 41, rue Cantagrel, F-75631 Paris Cedex 13 (FR)**

(74) Mandataire: **Bloch, Robert, Cabinet BLOCH 6, rue du Faubourg Saint- Honoré, F-75008 Paris (FR)**

## Description

La présente invention concerne un dispositif de stabilisation en fréquence d'un laser à excitation rf comprenant une cavité résonante remplie d'un gaz laser et présentant une impédance, un générateur de puissance alternative à fréquence radio rf présentant une impédance de sortie, des électrodes d'excitation du gaz laser reliées au générateur, et des moyens agencés pour faire varier la fréquence du laser.

Rappelons ici qu'un laser a de multiples applications aussi bien médicales que militaires, par exemple.

Les raies d'émission, ou d'absorption, dans les profils de gain des lasers, c'est-à-dire dans les courbes représentatives de l'intensité lumineuse des lasers en fonction de la fréquence, autour de fréquences de résonance particulières, ont pendant longtemps été utilisées pour la stabilisation des lasers, c'est-à-dire pour la fixation de la fréquence d'émission sur une des raies. Mais pour cela, il fallait notamment employer un détecteur d'intensité lumineuse, et cela n'était pas pratique.

Puis, les sections efficaces d'excitation des molécules des milieux gazeux laser, par collision électronique, variant selon leur nature et, pour des molécules données, selon leur niveau d'énergie, on a réalisé que, autour des fréquences de résonance, la population des niveaux, participant à l'amplification ou à l'absorption, variait de la même manière que l'intensité lumineuse en fonction de la fréquence de l'émission optique incidente. Or, une variation de population entraîne une variation des propriétés d'ionisation macroscopique du plasma laser, et donc de son impédance.

L'impédance d'un plasma laser variant donc avec la fréquence comme l'intensité lumineuse, on a ensuite proposé de stabiliser les lasers par leur impédance. Toutefois, une telle stabilisation optogalvanique n'a été jusqu'ici pratiquée que pour les lasers à excitation continue et plus particulièrement pour leur stabilisation en haut de raie, voir p.ex. Opt. Commun., vol. 30, no. 2, 1979, p. 213. Il avait bien été essayé d'appliquer cette technique de stabilisation optogalvanique aux lasers à excitation non continue, mais sans succès. Il faut dire que dans le cas des lasers à excitation continue, l'application de la technique était simple en raison des natures différentes du signal d'excitation et du signal de stabilisation, l'un étant continu et l'autre alternatif.

La demanderesse s'est repenchée sur le problème de la stabilisation optogalvanique des lasers à excitation non continue, à excitation rf, après l'apparition, vers les années 1980-1981, de la spectroscopie à décharge rf optogalvanique.

Il s'agit de produire, dans le milieu gazeux d'une cellule à examiner, des atomes excités par un plasma provoqué par un oscillateur à fréquence radio, couplé à la cellule, soit de manière capacitive par des électrodes externes fixées à la cellule, soit de manière inductive par une bobine entourant la cellule. A cause du couplage, l'impédance du milieu gazeux de la cellule constitue l'un des éléments de la charge de l'oscillateur. Cette impédance est modifiée par absorption de photons provoquée par un rayonnement laser incident à fréquence variable, et c'est cette modification d'impédance qui est détectée, soit directement au niveau de l'oscillateur, dont la fréquence ou l'amplitude est modulée en conséquence, soit par l'intermédiaire par exemple d'une antenne. Cette technique de spectroscopie laser est notamment décrite dans l'article de D. R. Lyons et al. publié dans Optics Communications, volume 38, numéro 1, du 1.7.1981 et dans l'article de C. Stanciulescu et al. publié dans Applied Physics Letters 37(10) du 15.11.1980.

Toutefois, l'analyse d'un gaz par spectroscopie laser à décharge rf optogalvanique est une chose et la stabilisation optogalvanique d'une cavité laser en est une autre, ne serait-ce qu'en raison du fait que, dans le problème posé, la cellule contenant le milieu gazeux et la cavité laser sont confondues, et que, dans les techniques connues de spectroscopie, les puissances rf mises en jeu sont particulièrement faibles.

Quoiqu'il en soit, la demanderesse a donc résolu le problème de la stabilisation optogalvanique d'un laser à excitation rf et propose aujourd'hui son invention.

La présente invention concerne un dispositif de stabilisation en fréquence d'un laser à excitation rf comprenant une cavité résonante remplie d'un gaz laser et présentant une impédance, un générateur de puissance alternative à fréquence radio rf présentant une impédance de sortie, des électrodes d'excitation du gaz laser reliées au générateur, et des moyens agencés pour faire varier la fréquence du laser, caractérisé par le fait que le générateur et les électrodes sont reliés par des moyens d'adaptation de l'impédance de la cavité laser à l'impédance de sortie du générateur et il est prévu des moyens agencés pour recevoir un signal de désadaptation d'impédance réfléchi par la cavité, et reliés aux moyens de variation de la fréquence par un circuit d'asservissement.

L'impédance de la tête d'excitation étant adaptée à celle de la ligne d'alimentation, ou la puissance réfléchie par la cavité étant réduite au minimum, une modification de la fréquence provoque une modification de l'impédance du plasma laser et donc l'apparition d'un signal réfléchi, ou une variation de ce signal si, à l'adaptation, celui-ci n'est pas tout-à-fait nul. Ce signal réfléchi constitue bien un signal optogalvanique.

Dans la forme de réalisation préférée du dispositif de l'invention, le générateur et les moyens de réception du signal de désadaptation sont reliés aux moyens d'adaptation par des moyens de couplage agencés pour éviter que le signal d'excitation ne soit reçu par les moyens de réception et le signal de désadaptation ne soit reçu par le générateur.

Dans ce cas, les moyens d'adaptation sont montés en bout de ligne support aussi bien du signal d'excitation que du signal de désadaptation réfléchi. Les moyens de couplage, avantageusement un circulateur ou un coupleur directionnel, dirigent le signal d'excitation sur les électrodes de la cavité laser et le signal réfléchi sur le circuit d'asservissement.

L'invention sera mieux comprise à l'aide de la description suivante de la forme de réalisation préférée du dispositif de l'invention, en référence aux dessins annexés, sur lesquels:

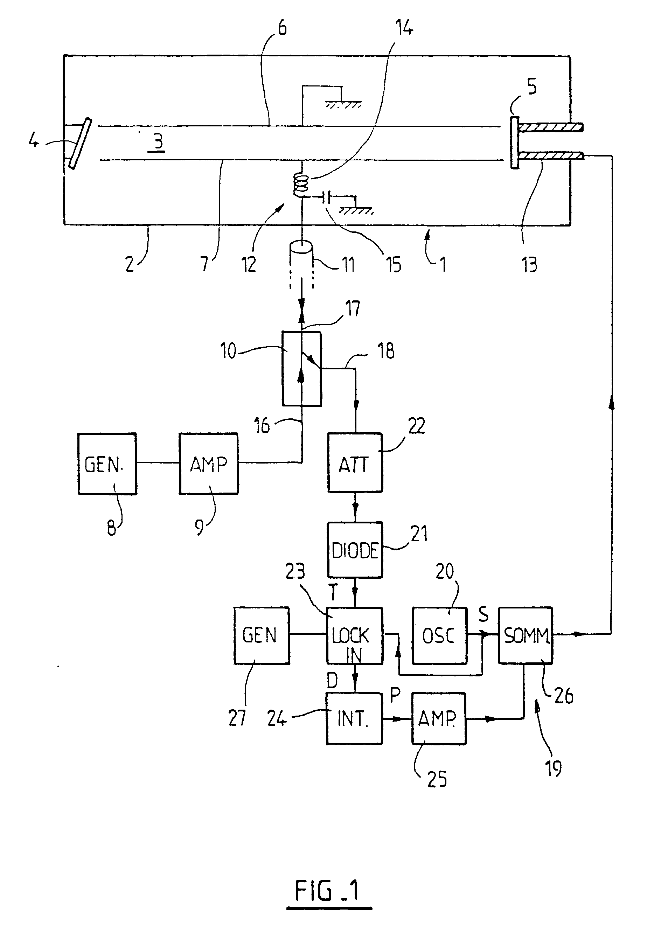

- la figure 1 représente le schéma synoptique du dispositif de l'invention, appliqué à un laser à excitation rf;

- la figure 2 représente l'une des raies du laser de la figure 1, un signal de modulation et le signal de désadaptation qui en résulte, et

- la figure 3 représente le signal de correction à appliquer.

Soit donc un laser 1, comportant, dans une structure métallique externe 2, une cavité résonante 3, remplie d'un gaz laser, par exemple un mélange à base de $CO_2$, fermée à ses deux extrémités par deux miroirs 4 et 5, entre lesquels s'étendent deux électrodes 6 et 7 sur pratiquement toute la longueur de la structure 2.

L'électrode 6 est reliée à la masse et l'électrode 7 est reliée à un générateur 8 de puissance alternative à fréquence radio rf, par l'intermédiaire d'un amplificateur de puissance rf 9, d'un circulateur à trois voies 10, d'une ligne coaxiale 11 et d'un circuit d'adaptation 12, tous ces équipements étant reliés dans l'ordre dans lequel ils viennent d'être énoncés. Le pompage électrique et l'émission laser de la cellule est obtenu ici par un champ transverse, c'est-à-dire perpendiculaire à l'axe optique. On aurait pu aussi considérer un laser à excitation rf longitudinale, selon le sens de la longueur de la cellule, bien que dans ce cas une certaine excitation transverse serait également induite.

Le miroir 5 est monté en bout d'une céramique piezo-électrique, constituée d'un tube 13, représenté en coupe pour la compréhension, dont un autre plan sensiblement de bout est fixé à la structure 2. L'excitation de la céramique 13 provoque sa compression et donc l'éloignement du miroir 5 du miroir 4, soit une augmentation de la longueur de la cavité résonante, et, par conséquent, une variation de la fréquence laser.

Le circuit d'adaptation 12, qui comprend, de façon classique, une self 14 et un condensateur 15, a pour fonction d'adapter, pour une fréquence donnée, l'impédance du laser 3 à l'impédance de sortie du générateur 8, et minimiser la puissance réfléchie par la tête laser 3 dans la ligne 11.

A partir de l'état d'adaptation, une modification de la fréquence du laser entraîne une modification de l'impédance du plasma et, par conséquent, une variation de la puissance réfléchie. Cette variation de la puissance réfléchie constitue un signal optogalvanique qui peut être extrait de la ligne 11 au moyen du circulateur 10, ou de tout autre coupleur directionnel, évitant que ce signal optogalvanique ne soit reçu par le générateur 8 ou, en d'autres termes, que la cavité 3 ne rayonne dans le générateur 8.

Le circulateur 10 est ici un circulateur à trois voies 16, 17, 18. Dans le sens de propagation de 16 vers 17, c'est-à-dire du générateur vers la cavité, le circulateur 10 ne couple pas la voie 18, alors que dans l'autre sens, il la couple pour diriger le signal optogalvanique réfléchi de la voie 17 vers la voie 18. De façon générale, un circulateur est un multipole dans lequel une voie n'est couplée qu'à une seule autre voie, de façon non réciproque.

Considérons tout d'abord le cas de la stabilisation en haut de raie et soulignons ici encore que, pour la fréquence de haut de raie, l'impédance de la tête laser étant adaptée à l'impédance de sortie du générateur 8, le signal réfléchi est nul ou quasiment nul, et de toutes façons minimisé. Une boucle d'asservissement 19, connectée entre le circulateur 10 et la céramique 13, va assurer cette stabilisation.

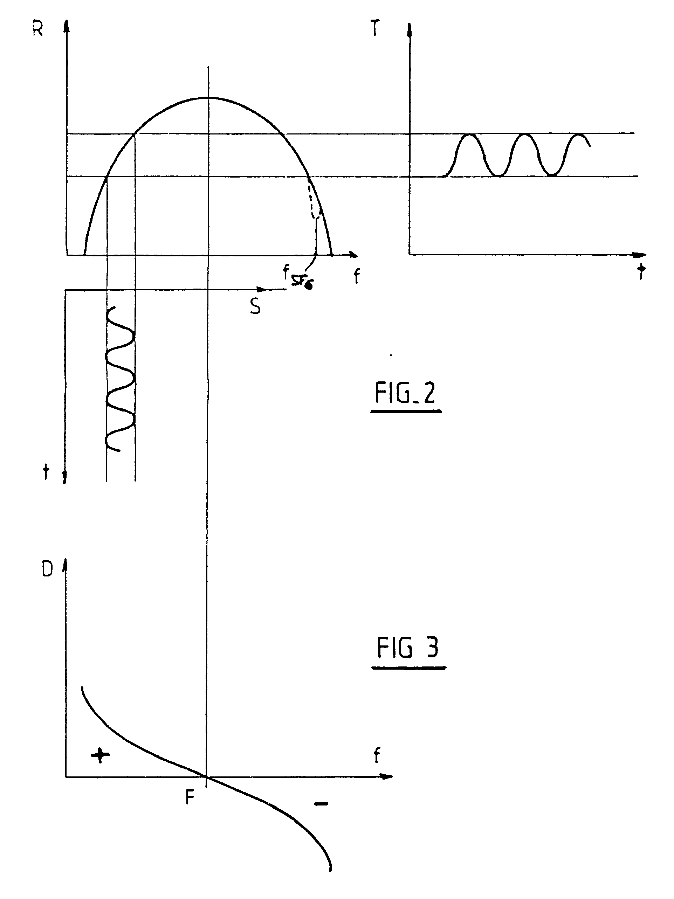

Le balayage de correction en fréquences de la cavité laser 3 est obtenu par application d'une tension continue, de correction, à la céramique piezoélectrique 13, tension positive ou négative selon le sens de la correction à appliquer. Si la fréquence à stabiliser F est dépassée, par exemple, la tension de correction doit être négative, dans le cas contraire, elle doit être positive. Une raie R de la cavité laser 3, c'est-à-dire l'enveloppe du signal laser en fonction de la fréquence, ayant la forme en cloche de la figure 2, on remarque que si on applique à la céramique piezoélectrique 13 une tension de modulation superposée alternative S (figure 2) de faible amplitude, la raie enveloppe est modulée suivant un signal également alternatif T (figure 2), en opposition de phase par rapport au signal S, au-delà de la fréquence F, et en phase, en-deça de la fréquence F. L'amplitude crête à crête du signal T passe par zéro à la fréquence F. Si on applique à un amplificateur à détection synchrone le signal T, le signal S étant pris comme référence, en fonction de la fréquence f, on obtient un signal D (figure 3), dont les valeurs sont proportionnelles à celles de la dérivée du signal R en fonction de la fréquence f, le signal D étant positif en-deça du point F, et négatif au-delà du point F. Le signal D fournit l'amplitude et le signe de la tension continue à appliquer à la céramique piezoélectrique 13 pour corriger la fréquence du laser.

En effet, si le plasma dans la cavité résonante 3 réfléchit, par le circulateur 10, dans le circuit d'asservissement 19 un signal de désadaptation, c'est que la fréquence n'est pas F, et alors, le signal D intégré qui en résultera modifiera cette fréquence dans le sens désiré. Ce n'est que pour la fréquence F, qu'aucune tension continue n'est appliquée à la céramique 13, la valeur du signal D étant nulle.

Le circuit d'asservissement 19, qui élabore les différents signaux décrits ci-dessus, va maintenant à son tour être décrit dans sa structure.

Ce circuit, ou tiroir, d'asservissement, comporte un oscillateur basse fréquence 20, opérant ici à quelques centaines de hertz, et délivrant le signal S destiné à exciter la céramique 13 qui va ainsi vibrer mais avec une faible amplitude. Une diode rf 21, par l'intermédiaire d'un atténuateur 22, par exemple de 10 dB, pour protéger la diode qui ne peut recevoir que des faibles puissances, par exemple de l'ordre de 50mW, est connectée à la voie 18 du circulateur 10. La diode 21, qui détecte le signal de désadaptation réfléchi et atténué, délivre, après redressement, l'enveloppe T de ce signal. La sortie de la diode 21 ainsi que la sortie de l'oscillateur 20 sont reliées aux entrées signal et référence, respectivement, d'un amplificateur à détection synchrone 23 (lock in) qui délivre en sortie le signal D représentatif du déphasage entre les signaux délivrés par l'oscillateur 20 et la diode 21 et de l'amplitude de la composante synchrone du signal de la diode 21.

Le signal D est intégré dans un intégrateur 24 délivrant en sortie le signal continu P, pouvant varier par exemple de 0 à 5 V. Ce signal P est amplifié dans un amplificateur haute tension 25, délivrant un signal similaire, variant par exemple de 0 à 1000 V, qui est appliqué à la céramique 13 par l'intermédiaire d'un sommateur 26 recevant également en entrée le signal de sortie S de l'oscillateur 20 et dont la sortie est reliée à la céramique 13.

Dans le cas où l'on veut stabiliser le laser à une autre fréquence que celle F du haut de raie, il suffit d'appliquer au détecteur synchrone 23 un signal de décalage, ou tension offset, délivré par un générateur 27, pour décaler en fréquence le passage de la courbe D par l'axe des abscisses f.

En introduisant dans la cavité laser 3 une cellule, par exemple, d'hexafluorure de soufre $SF_6$ à très basse pression, modifiant la raie R de la figure 2, autour de sa fréquence $f_{SF_6}$, suivant sa raie propre, on peut plus facilement et finement encore stabiliser la fréquence de la cavité 3 à cette fréquence $f_{SF_6}$, en raison de l'étroitesse du trou ainsi crée et de la forte pente de la dérivée de la courbe de part et d'autre de cette fréquence.

A la fréquence à stabiliser, l'idéal, jamais atteint, est qu'aucun signal ne soit réfléchi par le laser, ou que l'adaptation d'impédance soit parfaite. A cet égard, on préférera donc procéder à cette stabilisation optogalvanique sur des lasers guides d'ondes et plus particulièrement monolithiques, avec lesquels l'adaptation peut être réalisée à quelques centaines de mW près, pour une puissance de laser de 50 W. De tels lasers monolithiques sont notamment décrits dans la demande de brevet français au nom de la demanderesse, publiée sous le numéro 2 530 087.

Dans le dispositif qui vient d'être décrit, on a utilisé pour le signal d'excitation du générateur 8 et le signal de désadaptation réfléchi par le laser la même ligne 11 connectée à un circulateur 10.

Une telle disposition n'est pas impérative, même si c'est la plus simple et la plus élégante. On aurait pu aussi utiliser une seconde ligne distincte pour collecter par l'intermédiaire d'une antenne le signal optogalvanique, sans donc avoir besoin de circulateur. Mais il vaut mieux éliminer une ligne, et ses équipements d'extrémité, qu'un circulateur ou un coupleur directionnel.

**Revendications**

1. Dispositif de stabilisation en fréquence d'un laser à excitation rf comprenant une cavité resonante (3) remplie d'un gaz laser et présentant une impédance, un générateur de puissance alternative (8) à fréquence radio rf présentant une impédance de sortie, des électrodes (6, 7) d'excitation du gaz laser reliées au générateur (8), et des moyens (13) agencés pour faire varier la fréquence du laser, dans lequel le générateur (8) et les électrodes (6, 7) sont reliés par des moyens (12) d'adaptation de l'impédance de la cavité laser (3) à l'impédance de sortie du générateur (8) et dans lequel il est prévu des moyens (21) agencés pour recevoir un signal de désadaptation d'impédance réfléchi par la cavité (3), et reliés aux moyens (13) de variation de la fréquence par un circuit d'asservissement (19).

2. Dispositif selon la revendication 1, dans lequel le générateur (8) et les moyens (21) de réception du signal de désadaptation sont reliés aux moyens d'adaptation (12) par des moyens de couplage (10) agencés pour éviter que le signal d'excitation ne soit reçu par les moyens de réception (21) et le signal de désadaptation ne soit reçu par le générateur (8).

3. Dispositif selon la revendication 2, dans lequel lesdits moyens de couplage sont constitués par un circulateur (10) à trois voies (16, 17, 18).

4. Dispositif selon l'une des revendications 1 à 3, dans lequel le circuit d'asservissement (19) comprend des moyens (20) agencés pour moduler les moyens (13) de variation de la fréquence, des moyens (23) agencés pour détecter le déphasage entre le signal des moyens de modulation (20) et le signal des moyens (21) de réception du signal de désadaptation ainsi que l'amplitude de la composante synchrone du signal des moyens de réception (21), et des moyens (24) d'intégration du signal des moyens de détection (23) pour contrôler les moyens (13) de variation de la fréquence.

5. Dispositif selon l'une des revendications 1 à 4, dans lequel le circuit d'asservissement (19) comprend un oscillateur (20), relié aux moyens (13) de variation de la fréquence, une diode rf (21), pour détecter le signal réfléchi par la cavité (3), un amplificateur à détection synchrone (23), relié aux sorties de l'oscillateur (20) et de la diode (21), un intégrateur (24), relié, à l'entrée, à la sortie de l'amplificateur à détection synchrone (23) et, à la sortie, aux moyens de variation de la fréquence (13), par l'intermédiaire d'un sommateur (26), également relié, à l'entrée, à la sortie de l'oscillateur (20).

6. Dispositif selon la revendication 5, dans lequel la diode (21) est reliée à la sortie d'un atténuateur (10), et l'intégrateur (24) est relié à l'entrée d'un amplificateur (25).

7. Dispositif selon l'une des revendications 4 à 6, dans lequel lesdits moyens de détection (23) sont reliés à la sortie d'un générateur de décalage (27).

8. Dispositif selon l'une des revendications 1 à 7, dans lequel les moyens de variation de la fréquence comprennent une céramique piezoélectrique (13) supportant un (5) des deux miroirs (4, 5) de la cavité résonante (3).

9. Dispositif selon l'une des revendications 1 à 8, dans lequel la cavité résonante (3) du laser contient une cellule d'hexafluorure de soufre à très basse pression.

10. Dispositif selon l'une des revendications 1 à 8, dans lequel le laser est un laser monolithique.

**Patentansprüche**

1. Vorrichtung zur Frequenzstabilisierung eines Lasers mit einer rf Erregung, enthaltend einen Hohlraumresonator (3), der mit einem Lasergas gefüllt ist und eine Impedanz darstellt, einen Radiofrequenz rf, Wechselleistungsgenerator (8) der eine Ausgangsimpedanz darstellt, Erregerelektroden (6, 7) für das Lasergas, die an den Generator (8) angeschlossen sind, und eine Einrichtung (13) zur Veränderung der Laserfrequenz, wobei der Generator (8) und die Elektroden (6, 7) mitenander verbunden sind durch ein Glied (12) zur Anpassung der Impedanz des Laserhohlraumes (3) an die Ausgangsimpedanz des Generators (8), und wobei ein Glied (21) vorgesehen ist, das in der Lage ist, ein von dem Hohlraum (3) reflektiertes Impedanz-Fehlanpassungssignal zu empfangen, und das an die Frequenzveränderungseinrichtung (13) über einen Regelkreis (19) angeschlossen ist.

2. Vorrichtung nach Anspruch 1, bei der der Generator (8) und das Glied (21) für den Empfang des Fehlanpassungssignals an das Anpassungsglied (12) über ein Kopplungsglied (10) angeschlossen sind, das gewährleistet, daß das Erregersignal nicht von dem Empfangsglied (21) und das Fehlanpassungssignal nicht von dem Generator (8) empfangen wird.

3. Vorrichtung nach Anspruch 2, bei der das Kopplungsglied durch eine Richtungsgabel (10) mit drei Wegen (16, 17, 18) gebildet ist.

4. Vorrichtung nach einem der Ansprüche 1 bis 3, bei der der Regelkreis (19) ein Glied (20) zur Modulation der Frequenzveränderungsreinrichtung (13), ein Empfangsglied (23) zur Feststellung der Phasenverschiebung zwischen dem Signal des Modulationsgliedes (20) und dem Signal des Fehlanpassungssignal-Empfangsgliedes (21) und der Amplitude der Synchronkomponente des Signals des Empfangsglieds (21) sowie ein Glied (24) zur Integration des Signals des Empfangsglieds (23) aufweist, um die Frequenzveränderungseinrichtung (13) zu steuern.

5. Vorrichtung nach einem der Ansprüche 1 bis 4, bei der der Regelkreis (19) einen an die Frequenzveränderungseinrichtung (13) angeschlossenen Oszillator (20), eine Diode rf (21) zum Empfang des von dem Hohlraum (3) reflektierten Signals, einen an die Ausgänge des Oszillators (20) und der Diode (21) angeschlossenen Synchronempfangsverstärker (23), und ein Integrationsglied (24) enthält, das mit seinem Eingang an den Ausgang des Synchronempfangsverstärkers (23) und mit seinem Ausgang an die Frequenzveränderungseinrichtung (13) angeschlossen ist, und zwar über ein Summierglied (26), das mit seinem Eingang ebenfalls an den Ausgang des Oszillators (20) angeschlossen ist.

6. Vorrichtung nach Anspruch 5, bei der die Diode (21) an den Ausgang eines Dämpfungsgliedes (10) angeschlossen ist, während das Integrationsglied (24) an den Eingang eines Verstärkers (25) angeschlossen ist.

7. Vorrichtung nach einem der Ansprüche 4 bis 6, bei der das Empfangslied (23) an den Ausgang eines Verschiebungsgeneratos (27) angeschlossen ist.

8. Vorrichtung nach einem der Ansprüche 1 bis 7, bei der die Frequenzveränderungseinrichtung einen piezoelektrischen Keramikkörper (13) umfaßt, der einen (5) der beiden Spiegel (4, 5) des Hohlraumresonators (3) trägt.

9. Vorrichtung nach einem der Ansprüche 1 bis 8, bei der der Hohlraumresonator (3) des Lasers eine Schwefelhexafluoridzelle mit sehr niedrigem Druck enthält.

10. Vorrichtung nach einem der Ansrüche 1 bis 8, bei der der Laser ein monolithischer Laser ist.

**Claims**

1. Device for stabilizing the frequency of an RF excitation laser comprising a resonant cavity (3) filled with a laser gas and having an impedance, an RF radiofrequency alternating power generator (8) having an output impedance, electrodes (6, 7) for exciting the laser gas connected to the generator (8), and means (13) for causing the frequency of the laser to vary, wherein the generator (8) and the electrodes (6, 7) are connected by means (12) for matching the impedance of the laser cavity (3) to the output impedance of the generator (8), and wherein means (21) are provided for receiving an impedance mismatch signal reflected by the cavity (3) and connected to the means (13) for varying the frequency through a servo-control circuit (19).

2. Device as claimed in claim 1, wherein the generator (8) and the means (21) for receiving the mismatch signal are connected to the matching means (12) by coupling means (10) for preventing the excitation signal from being received by the reception means (21) and the mismatch signal from being received by the generator (8).

3. Device as claimed in claim 2, wherein the coupling means are constituted of a three path (16, 17, 18) circulator (10).

4. Device as claimed in one of claims 1 to 3, wherein the servo control circuit (19) comprises means (20) for modulating the frequency varying means (13), means (23) adapted for detecting the phase shift between the signal of the modulating means (20) and the signal of the mismatch signal receiving means (21) and the amplitude of the synchronous component of the signal of the receiving means (21) and means (24) for integrating the signal from the detecting means (23) for controlling the frequency varying means (13).

5. Device as claimed in one of claims 1 to 4, wherein said servo-control circuit (19) comprises an oscillator (20) connected to the frequency varying means (13), an RF diode (21), for detecting the signal reflected by the cavity (3), a synchronous detection amplifier (23) connected to the outputs of the oscillator (20) and of the diode (21), an integrator (24) with an input connected to the output of the synchronous detection amplifier (23) and with an output connected to the frequency varying means (13), through a summator (26) with an input connected also to the output of the oscillator (20).

6. Device as claimed in claim 5, wherein the diode (21) is connected to the output of an attenuator (10), and the integrator (24) is connected to the input of an amplifier (25).

7. Device as claimed in one of claims 4 to 6, wherein said detecting means (23) are connected to the output of a shift generator (27).

8. Device as claimed in one of claims 1 to 7, wherein the frequency varying means comprise a piezoelectric ceramic (13) supporting one (5) of the two mirrors (4, 5) of the resonant cavity (3).

9. The device as claimed in one of claims 1 to 8, wherein the resonant cavity (3) of the laser contains a cell of sulfur hexafluoride at very low pressure.

10. The device as claimed in one of claims 1 to 8, wherein said laser is a monolithic laser.

FIG.1

FIG_2

FIG 3